# EUROPÄISCHE PATENTSCHRIFT

(11) **EP 3 724 608 B1**
(45) Veröffentlichungstag und Bekanntmachung des Hinweises auf die Patenterteilung: **06.04.2022**
(21) Anmeldenummer: 18792397.4
(22) Anmeldetag: 19.10.2018
(51) Int. Cl.: G01D 5/14, G01P 3/487, G01D 11/24, G01D 11/30

(54) **SENSORBAUGRUPPE UND VERFAHREN ZUR HERSTELLUNG EINER SENSORBAUGRUPPE**
SENSOR ASSEMBLY AND METHOD FOR PRODUCING A SENSOR ASSEMBLY
MODULE DE CAPTEURS ET PROCÉDÉ SERVANT À FABRIQUER UN MODULE DE CAPTEURS

(30) Priorität: 11.12.2017 DE 102017222393
(43) Veröffentlichungstag der Anmeldung: 21.10.2020
(73) Patentinhaber: Robert Bosch GmbH, 70442 Stuttgart (DE)
(72) Erfinder: ULLMANN, Thomas, 99310 Arnstadt (DE); ELZNER, Mathias, 99096 Erfurt (DE)
(86) Internationale Anmeldenummer: PCT/EP2018/078725
(87) Internationale Veröffentlichungsnummer: WO 2019/115066

(56) Entgegenhaltungen:
- EP-A1- 1 757 901
- US-A1- 2004 174 164
- US-A1- 2009 140 725
- US-A1- 2011 068 779

## Beschreibung

### Stand der Technik

Sensorbaugruppen, die ein Halbleiter-Sensorelement zur Drehzahlerfassung und/oder Positionserfassung aufweisen, werden im Stand der Technik in vielfältiger Weise eingesetzt. Als gehäuste Halbleiter-Sensorelement werden beispielsweise Hall-IC-Bauelemente oder auch ASIC (Anwendungsspezifische integrierte Schaltung) mit einem Hall-IC eingesetzt, die in ein Gehäuse eingebettet sind. Derartige Sensoren werden oft in Verbindung mit magnetischen oder unmagnetischen Geberrädern zur Drehzahlerfassung eingesetzt. Rotiert ein Zähne und Zahnlücken aufweisendes Geberrad vor der Frontseite der Sensorbaugruppe, so wird eine Magnetfeldänderung am Ort des Halbleiter-Sensorelementes hervorgerufen, wodurch in Abhängigkeit von den passierenden Zähnen und Zahnlücken ein elektrisches Signal erzeugt werden kann, aus dem die Drehzahl des Geberrades bestimmt werden kann. Zusätzlich oder alternativ können derartige Sensorbaugruppen beispielsweise in Kombination mit kodierten Geberrädern auch zur Positionserfassung eines Absolutwinkels eingesetzt werden, so dass eine bestimmte Drehwinkelstellung eines rotierenden Geberrades detektiert werden kann.

Aus der DE 10 2014 220 974 A1 ist beispielswiese eine Sensorbaugruppe bekannt, die einen Haltekörper mit daran angeordneten Anschlusselementen und ein gehäustes Halbleiter-Sensorelement mit Kontaktelementen aufweist. Das gehäuste Halbleiter-Sensorelement ist an einer Montagefläche des Haltekörpers angeordnet. Anschlusselemente des Halbleiter-Sensorelementes sind mit den Kontaktelementen elektrisch verbundenen. Ein an dem Haltekörper angeordnetes ausgehärtetes Umhüllungsmaterial deckt das gehäuste Halbleiter-Sensorelement vollständig ab. In der DE 10 2014 220 974 A1 wird als Umhüllungsmaterial eine Epoxidharz-Vergussmasse verwandt.

Andere bekannte Sensorbaugruppen verwenden eine Spritzgussmasse als Umhüllungsmaterial. So ist beispielsweis aus der DE 10 2009 000 428 A1 eine Sensorbaugruppe bekannt, die einen Halter aus thermoplastischen Kunststoff umfasst, an dem als Stanzgitterteile ausgebildete Anschlusselemente eingespritzt sind. Die Anschlusselemente weisen von der Sensoranordnung abstehende Anschlussabschnitte zur äußeren Kontaktierung der Sensoranordnung auf. Die Sensoranordnung umfasst weiterhin ein auf eine Montagefläche des Halters aufgesetztes gehäustes Halbleiter-Sensorelement mit Kontaktelementen, die mit den Anschlusselementen elektrisch verbundenen sind. Zum Schutz des Sensorelements und der elektrischen Verbindungstellen ist ein Umhüllungsmaterial aus Duroplast auf den Halter aufgebracht. Das fertig ausgehärtete Umhüllungsmaterial deckt das gehäuste Halbleitersensorelement vollständig ab.

Ferner sind beispielsweise aus der US 6 169 316 B1 Sensorbaugruppen mit einem zur Druckmessung verwandten Halbleiter-Sensorelement bekannt, bei denen ein Halbleiter-Sensorelement mittels eines Klebers auf eine Montagfläche aufgeklebt wird. Bei diesen Sensorbraugruppen ist das Halbleiter-Sensorelement aber nicht in ein Gehäuse integriert. Außerdem kann das zur Druckmessung verwandte Halbleiter-Sensorelement hier grundsätzlich nicht mit einem ausgehärteten Umhüllungsmaterial abgedeckt werden, da dann keine Druckübertragung auf das Halbleiter-Sensorelement mehr möglich ist.

Weitere Sensorbaugruppen mit einem Haltekörper und einem an dem Haltekörper angeordneten Halbleiter-Sensorelement sind aus den Dokumenten US 2004/174164 A1; EP 1 757 901 A1 und US 2009/140725 A1 bekannt.

### Offenbarung der Erfindung

Die Erfindung betrifft eine Sensorbaugruppe, umfassend einen Haltekörper und ein an dem Haltekörper angeordnetes gehäustes Halbleiter-Sensorelement zur Drehzahlerfassung und/oder Positionserfassung, wobei ein das gehäuste Halbleiter-Sensorelement vollständig abdeckendes ausgehärtetes Umhüllungsmaterial an dem Haltekörper angeordnet ist. Erfindungsgemäß ist das gehäuste Halbleiter-Sensorelement mittels eines von dem Umhüllungsmaterial verschiedenen Klebers auf eine Montagefläche des Haltekörpers aufgeklebt, wobei der Kleber in einem Aufnahmeraum zwischen der Montagefläche und einer der Montagefläche zugwandten Unterseite des Halbleiter-Sensorelementes angeordnet ist.

Erfindungsgemäß liegt das gehäuste Halbleiter-Sensorelements mit dem äußeren Randbereich seiner Unterseite unmittelbar auf einer den Aufnahmeraum umgebenden Stützfläche des Haltekörpers oder auf einer den Aufnahmeraum umgebenden Stützfläche eines an dem Haltekörper angeordneten weiteren Bauteils auf. Die Stützfläche ermöglicht vorteilhaft eine definierte Ausrichtung des gehäusten Halbleiter-Sensorelements in einer zur Montagefläche senkrechten Richtung. Dies ist insbesondere bei Hall-ICs oder ASICS mit einem Hall-IC vorteilhaft, da hier die Ausrichtung des Hall-IC für die Detektion des magnetischen Feldes eines Geberrades ein wichtiger Parameter ist. In einer besonders vorteilhaften Ausführungsform kann die Stützfläche für das gehäuste Halbleiter-Sensorelement durch eine dem Halbleiter-Sensorelement zugewandte Stirnseite eines Ringmagneten gebildet werden. In dem Fall kann das gehäuste Halbleiter-Sensorelement direkt auf der Stirnseite des Ringmagneten aufliegen.

### Vorteile der Erfindung

Halbleitermaterialien sind erfahrungsgemäß bruchempfindlich. Bei den bekannten Sensorbaugruppen zur Drehzahlerfassung und/oder Positionserfassung wird das gehäuste Halbleiter-Sensorelement von einem ausgehärteten Umhüllungsmaterial, bei dem es sich beispielsweise um ein Epoxidharzmaterial handeln kann, abgedeckt. Bei der Auftragung eines solchen Umhüllungsmaterials, was beispielsweise auch im Spritzguss erfolgen kann, wirken von allen Seiten Kräfte auf das bruchempfindliche Halbleiter-Sensorelement, die zu einer Verlagerung des gehäusten Halbleiter-Sensorelements und im ungünstigen Fall zu einem Bruch des in dem Gehäuse befindlichen Halbleiter-Sensorelements führen können.

Die erfindungsgemäße Sensorbaugruppe verwendet vorteilhaft einen in einen Aufnahmeraum zwischen einer Montagefläche des Haltekörpers und einer Unterseite des gehäusten Halbleiter-Sensorelements eingebrachten Kleber zur Befestigung und Stützung des gehäusten Halbleiter-Sensorelements. Dieser Kleber fixiert das gehäuste Halbleiter-Sensorelement vorteilhaft in seiner Position während der Auftragung des Umhüllungsmaterials, so dass dieses bei der Auftragung des Umhüllungsmaterials nicht verrutschen oder verlagert werden kann. Darüber hinaus wird durch den in dem Aufnahmeraum angeordneten Kleber vorteilhaft erreicht, dass eine Verformung des bruchempfindlichen Halbleiter-Sensorelementes während der Auftragung und Aushärtung des Umhüllungsmaterials verhindert beziehungsweise minimiert wird. Außerdem dient der in dem Aufnahmeraum enthaltene Kleber vorteilhaft der mechanischen Dämpfung thermomechanischer Spannungen, die im späteren Betrieb der Sensorbaugruppe auf das gehäuste Halbleiter-Sensorelement einwirken können. Der in dem Aufnahmeraum eingebrachte Kleber wirkt wie ein mechanisches Dämpfungsmittels das auf das gehäuste Halbleiter-Sensorelement einwirkende Kräfte aufnimmt und kompensiert, so dass ein Bruch des Halbleiter-Sensorelements vermieden wird.

Vorteilhafte Ausgestaltungen und Weiterbildungen der Erfindung werden durch die in den abhängigen Ansprüchen enthaltenen Merkmale ermöglicht.

Die Montagefläche kann in einer Richtung senkrecht zur Montagefläche gesehen gegenüber der Stützfläche zurückversetzt sein, wodurch in einfacher Weise ein Aufnahmeraum für den Kleber ausgebildet werden kann. Der Kleber kann in diesen Aufnahmeraum beispielsweise mit einem Dispenser eingebracht werden, ohne dass die Stützfläche verunreinigt wird.

Wenn die Sensorbaugruppe einen Magneten aufweist, der beispielweise in Kombination mit einem passiven magnetischen Geberrad benötigt wird, so kann in den Haltekörper der Sensorbaugruppe vorteilhaft eine Ringnut eingelassen sein, die einen an dem Haltekörper ausgebildeten Montagesockel umläuft, wobei an einer dem gehäusten Halbleiter-Sensorelement zuweisenden Seite des Montagesockels die Montagefläche ausgebildet ist und in der Ringnut als weiteres Bauteil der Sensorbaugruppe ein Ringmagnet angeordnet ist. Der Ringmagnet kann beispielsweise durch eine Klemmung in der Ringnut befestigt sein.

Falls ein Ringmagnet verwandt wird, kann die Stützfläche für das gehäuste Halbleiter-Sensorelement vorteilhaft durch eine dem gehäusten Halbleiter-Sensorelement zugewandte Stirnseite des Ringmagneten gebildet werden. In dem Fall liegt das gehäuste Halbleiter-Sensorelement vorteilhaft direkt auf der Stirnseite des Ringmagneten auf.

Zwischen dem Ringmagneten und den Innenwänden der Ringnut kann ein Spalt bestehen. Beispielsweise mittels Klemmbacken oder Klemmrippen, die in dem Spalt angeordnet sein können, kann der Ringmagnet in einem Abstand zu den Innenwänden der Ringnut gehalten werden. Dadurch entsteht ein Spalt, der den Aufnahmeraum mit dem Außenraum verbindet. Bei der Auftragung des Klebers in dem Aufnahmeraum und/oder beim Andrücken des gehäusten Halbleiter-Sensorelements gegen den Kleber kann dieser ein Stück in den Spalt ausweichen. Der Spalt kann daher vorteilhaft als ein Kanal für während des Fügens verdrängten Klebstoff vorgesehen sein.

In einem späteren Verfahrensschritt kann der Spalt von außen mit einer Vergussmasse gefüllt werden. Die Vergussmasse kann auch durch das Umhüllungsmaterial gebildet werden, das bei oder nach der Auftragung aushärtet.

Die Sensorbaugrupp kann eine Wand aufweisen, die von einer dem gehäusten Halbleiter-Sensorelement zuweisenden Seite des Haltekörpers in Richtung des gehäusten Halbleiter-Sensorelementes über die Montagefläche hinaus absteht und die Ringnut umfasst. Vorteilhaft kann diese Wand die elastischen Kräfte beim Einpressen des Ringmagneten in die Ringnut aufnehmen.

Weiterhin vorteilhaft ist ein Verfahren zur Herstellung einer Sensorbaugruppe bei dem zunächst ein gehäustes Halbleiter-Sensorelements zur Drehzahlerfassung und/oder Positionserfassung bereitgestellt wird. Zusätzlich wird ein Haltekörper bereitgestellt, der eine Montagefläche aufweist, wobei an dem Haltekörper oder an einem an dem Haltekörper angeordneten weiteren Bauteil eine die Montagefläche umlaufende Stützfläche ausgebildet ist, wobei die Montagefläche gegenüber der Stützfläche in einer Richtung senkrecht zur Montagefläche gesehen zurückversetzt ist, wodurch vorteilhaft ein Aufnahmeraum gebildet sein kann. Der Haltekörper kann beispielsweise durch ein thermoplastisches Spritzverfahren hergestellt werden, bei dem als elektrische Anschlusselemente verwandte Stanzgitterteile mit einer Spritzgussmasse umspritzt werden.

Bei dem erfindungsgemäßen Verfahren wird zunächst ein Kleber beispielsweise mittels eines Dispensers oder einer Dosiereinrichtung innerhalb des Aufnahmeraums auf die Montagefläche aufgebracht, wobei der Aufnahmeraum etwas bis zur Höhe der Stützfläche oder knapp darunter mit dem Kleber aufgefüllt sein kann. Vorzugsweise kann ein Kleber verwandt werden, dessen Viskosität ausreichend ist, um auf der Montagefläche einen Klebetropfen oder Hügel zu bilden, der bis auf die Höhe der Stützfläche aufragt. Anschließend wird das gehäuste Halbleiter-Sensorelement mit seiner der Montagefläche zugewandten Unterseite unmittelbar auf die Stützfläche aufgesetzt. Dabei gelangt der Bereich der Unterseite zwischen der Randfläche an dem Kleber zu Anlage, wodurch dieser in dem Aufnahmeraum verdrängt und eingedrückt wird. Ein Spalt in dem Aufnahmeraum kann vorteilhaft der Aufnahme von verdrängtem Klebstoff dienen. In der Endposition liegt das gehäuste Halbleiter-Sensorelement mit dem äußeren Randbereich seiner Unterseite unmittelbar auf der Stützfläche auf und der Kleber füllt den gesamten Aufnahmeraum unterhalb des gehäusten Halbleiter-Sensorelements. Zum Schluss kann der Haltekörper mit dem Umhüllungsmaterial versehen werden. Dies kann beispielsweise im Spritzguss mit beispielsweise einem Thermoplast erfolgen. Das Umhüllungsmaterial deckt zumindest das gehäuste Halbleiter-Sensorelement vollständig ab und kann darüber hinaus beispielsweise auch den Außenmantel der Sensorgruppe bilden.

### Kurze Beschreibung der Zeichnung

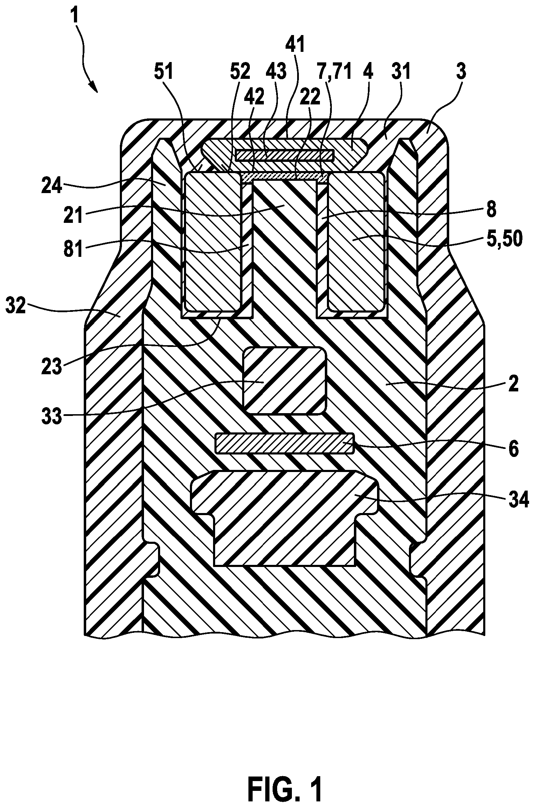

Fig. 1 zeigt einen schematischen Aufbau der Sensorbaugruppe für ein Ausführungsbeispiel der Erfindung.

### Ausführungsformen der Erfindung

In Fig. 1 ist ein Querschnitt durch den Kopfteil einer Sensorbaugruppe 1 in einem Ausschnitt dargestellt.

Die Sensorbaugruppe 1 weist einen Haltekörper 2 aus beispielweise Kunststoff auf. Der Haltekörper 2 kann beispielsweise als Spritzgussteil durch Umspritzen von metallischen Stanzgitterbahnen 6 hergestellt sein. An einem Kopfteil des Haltekörpers 2 ist eine Ringnut 23 vorgesehen, die konzentrisch um einen Montagesockel 21 herum angeordnet sein kann. Endseitig ist an dem Montagesockel 21 eine Montagefläche 22 ausgebildet. Vorzugsweise ist die Montagefläche 22 als ebene Fläche ausgebildet. Die Ringnut 23 kann von einer an dem Haltekörper 2 ausgebildeten, vorzugsweise elastischen, umlaufenden Wand 24 flankiert sein, welche in Richtung zur Montagefläche 22 ein Stück weit über diese hinausragen kann.

In die Ringnut 23 ist ein Bauteil 5 eingepresst, bei dem es sich beispielsweise um einen Ringmagneten 50 der Sensorbraugruppe 1 handeln kann. Hierzu können an der Innenwandung der Ringnut 23 nicht dargestellte Klemmmittel angeordnet sein, die es ermöglichen, den Ringmagneten 50 in der Ringnut 23 einzuklemmen.

Wie in Fig. 1 erkennbar ist, kann der Ringmagnet 50 durch einen im halbseitigen Querschnitt des Ringmagneten betrachtet U-f-förmigen Spalt 8 von der Innenwandung der Ringnut 24 beabstandet sein. Die von dem Haltekörper 2 abgewandte Stirnseite 51 des Ringmagneten bildet ein Stützfläche 52 für ein gehäustes Halbleiter-Sensorelement 4. Die Stützfläche 52 kann aber auch anders als dargestellt, an einem anderen Bauteil 5 oder direkt an dem Haltekörper 2 ausgebildet sein.

Das gehäuste Halbleiter-Sensorelement 4 kann beispielsweise als Halbleiter-Sensorelement einen Hall-IC oder ein ASIC (Anwendungsspezifische integrierte Schaltung) mit einem Hallbauelement umfassen, das zu Drehzahlerfassung oder zur Positionsbestimmung vorgesehen ist. Das Halbleiter-Sensorelement ist in Fig. 1 mit dem Bezugszeichen 43 versehen. Das Halbleiter-Sensorelement 43, beispielsweise auf Siliziumbasis ist einem Gehäuse aus beispielsweise Epoxidharz versehen und weist nicht dargestellte elektrische Kontakte auf. Zusammen mit dem Gehäuse bildet das Halbleiter-Sensorelement 43 das gehäuste Halbleiter-Sensorelement 4. Das gehäuste Halbleiter-Sensorelement 4 ist eingerichtet, um ein an einer Sensorseite 41 des gehäusten Halbleiter-Sensorelements 4 anliegendes magnetisches Signal zu erfassen. Das gehäuste Halbleiter-Sensorelement 4 weist eine von der Sensorseite 41 abgewandte Unterseite 42 auf, die beispielsweise parallel zu der Sensorseite 41 ausgebildet ist.

Das gehäuste Halbleiter-Sensorelement 4 ist mit dem äußeren Randbereich seiner Unterseite 42 umlaufend auf die Stützfläche 52 direkt aufgelegt. Wie in Fig. 1 gut zu erkennen ist, ist die Montagefläche 22 in einer Richtung senkrecht zur Montagefläche 22 gesehen gegenüber der Stützfläche 52 zurückversetzt, so dass ein Aufnahmeraum 7 entsteht. In dem Aufnahmeraum 7 ist ein Kleber 71 angeordnet. Beim Aufsetzen des Halbleiter-Sensorelements 4 auf die Stützfläche 52 kann der Kleber 71 in dem Aufnahmeraum 7 verdrängt werden und beispielsweise in den Spalt 8 eindringen. Der Kleber 71 kann den Aufnahmeraum 7 zwischen der Montagefläche 22 und der Unterseite 42 des gehäusten Halbleiter-Sensorelementes 4 auffüllen. Dadurch wird das Halbleiter-Sensorelement 4 in seiner Lage an dem Haltekörper 2 für einen anschließenden Auftragungsvorgang von Umhüllungsmaterial 3 fixiert.

Das Umhüllungsmaterial 3 kann beispielsweise in einem Transferformverfahren oder Spritzgussverfahren an dem Haltekörper angeordnet werden. Das Umhüllungsmaterial 3 kann ein Epoxidharz, ein Duroplast oder (vorzugsweise) ein thermoplastisches Material umfassen. Das Umhüllungsmaterial 3 kann eine kappenartige Abdeckung 31 über dem Halbleiter-Sensorelement 4 bilden und weiterhin einen einstückig damit verbundenen Außenmantel 32 ausbilden, der an den Seitenwänden des Haltekörpers 2 fest anliegt. Das Umhüllungsmaterial 3 kann weiterhin auch in dafür vorgesehene Aussparungen des Haltekörpers 2 beispielsweise in den Bereichen 33 und 34 eindringen. Das Umhüllungsmaterial 3 kann beispielsweise im ausgehärteten Zustand nicht mehr zerstörungsfrei von dem Haltekörper 2 entfernt werden.

Das Umhüllungsmaterial 3 kann auch beispielsweise von der Stirnseite 51 aus in den Spalt 8 eindringen und diesen, wie dargestellt, ganz oder teilweise auffüllen. Alternativ kann vor der Auftragung des Umhüllungsmaterials 3 ein Vergussmaterial 81 in den Spalt eingebracht werden.

Bei der Herstellung der Sensorbaugruppe wird wie folgt verfahren. Zunächst wird der Kleber 71 beispielsweise mittels eines Dispensers innerhalb des Aufnahmeraums 7 auf die Montagefläche 22 aufgebracht, wobei der Aufnahmeraum 7 etwas bis zur Höhe der Stützfläche 52 oder knapp darunter mit dem Kleber 71 aufgefüllt werden kann. Beispielsweise kann ein Kleber verwandt werden, dessen Viskosität ausreichend ist, um auf der Montagefläche 22 einen Klebetropfen oder Hügel zu bilden, der bis auf die Höhe der Stützfläche 52 aufragt. Anschließend wird das gehäuste Halbleiter-Sensorelement 4 mit seiner der Montagefläche 22 zugewandten Unterseite 42 unmittelbar auf die Stützfläche 52 aufgesetzt. Dabei gelangt der Bereich der Unterseite 42 zwischen der Randfläche an dem Kleber 71 zu Anlage, wodurch dieser in dem Aufnahmeraum 7 verdrängt wird. Der Spalt 8 kann vorteilhaft der Aufnahme von verdrängtem Klebstoff dienen. In der Endposition liegt das gehäuste Halbleiter-Sensorelement 4 wie dargestellt mit dem äußeren Randbereich seiner Unterseite 42 unmittelbar auf der Stützfläche 52 auf und der Kleber 71 füllt den gesamten Aufnahmeraum 8 unterhalb des Halbleiter-Sensorelements 4 auf, wodurch das gehäuste Halbleiter-Sensorelement in seiner Lage fixiert ist. Nicht dargestellte elektrische Kontakte des gehäusten Halbleiter-Sensorelementes 4 können mit ebenfalls in Fig. 1 nicht dargestellten elektrischen Anschlusselementen des Haltekörpers kontaktiert werden. Dies kann beispielsweise ähnlich zu der in der DE 10 2014 220 974 A1 beschriebenen Weise erfolgen.

Zum Schluss kann der Haltekörper 2 mit dem Umhüllungsmaterial 3 beispielsweise im Spritzguss versehen werden, wobei das Umhüllungsmaterial 3 zumindest das gehäuste Halbleiter-Sensorelement 4 abdeckt und darüber hinaus beispielsweise auch den Außenmantel der Sensorbaugruppe 1 bilden kann.

## Patentansprüche

1. Sensorbaugruppe (1), umfassend einen Haltekörper (2) und ein an dem Haltekörper (2) angeordnetes gehäustes Halbleiter-Sensorelement (4) zur Drehzahlerfassung und/oder Positionserfassung, wobei ein das gehäuste Halbleiter-Sensorelement (4) vollständig abdeckendes ausgehärtetes Umhüllungsmaterial (3) an dem Haltekörper (2) angeordnet ist, wobei das gehäuste Halbleiter-Sensorelement (4) mittels eines von dem Umhüllungsmaterial (3) verschiedenen Klebers (71) auf eine Montagefläche (22) des Haltekörpers (2) aufgeklebt und der Kleber (71) in einem Aufnahmeraum (7) zwischen der Montagefläche (22) und einer der Montagefläche (22) zugwandten Unterseite (42) des gehäusten Halbleiter-Sensorelementes (4) angeordnet ist, **dadurch gekennzeichnet, dass** das gehäuste Halbleiter-Sensorelement (4) mit dem äußeren Randbereich seiner Unterseite (42) unmittelbar auf einer den Aufnahmeraum (7) umgebenden Stützfläche (52) des Haltekörpers (2) oder auf einer den Aufnahmeraum (7) umgebenden Stützfläche (52) eines an dem Haltekörper (2) angeordneten weiteren Bauteils (52) aufliegt.

2. Sensorbaugruppe nach Anspruch 1, **dadurch gekennzeichnet, dass** die Montagefläche (22) in einer Richtung senkrecht zur Montagefläche (22) gesehen gegenüber der Stützfläche (52) zurückversetzt ist.

3. Sensorbaugruppe nach einem der vorstehenden Ansprüche, **dadurch gekennzeichnet, dass** in den Haltekörper (2) eine Ringnut (23) eingelassen ist, die einen an dem Haltekörper (2) ausgebildeten Montagesockel (21) umläuft, wobei an einer dem gehäusten Halbleiter-Sensorelement (4) zuweisenden Seite des Montagesockels (21) die Montagefläche (22) ausgebildet ist und in der Ringnut (23) als weiteres Bauteil (5) der Sensorbaugruppe (1) ein Ringmagnet (50) angeordnet ist.

4. Sensorbaugruppe nach Anspruch 3, **dadurch gekennzeichnet, dass** der Ringmagnet (50) in der Ringnut (23) eingeklemmt gehalten ist.

5. Sensorbaugruppe nach den Ansprüchen 1 und 3, **dadurch gekennzeichnet, dass** die Stützfläche (52) durch eine dem gehäusten Halbleiter-Sensorelement (4) zugewandte Stirnseite (51) des Ringmagneten (50) gebildet wird.

6. Sensorbaugruppe nach Anspruch 3, **dadurch gekennzeichnet, dass** ein Spalt (8) zwischen dem Ringmagneten (50) und den Innenwänden der Ringnut (23) mittels einer Vergussmasse (81) gefüllt ist.

7. Sensorbaugruppe nach Anspruch 6, **dadurch gekennzeichnet, dass** die Vergussmasse (81) durch das ausgehärtete Umhüllungsmaterial (3) gebildet wird.

8. Sensorbaugruppe nach einem der Ansprüche 3 bis 7, **dadurch gekennzeichnet, dass** von einer dem gehäusten Halbleiter-Sensorelement (4) zuweisenden Seite des Haltekörpers (2) eine die Ringnut (23) umfassende Wand (24) in Richtung des gehäusten Halbleiter-Sensorelementes (4) über die Montagefläche (22) hinaus absteht.

9. Verfahren zur Herstellung einer Sensorbaugruppe (1) nach einem der Ansprüche 1 bis 8, **gekennzeichnet durch** die folgenden Verfahrensschritte,
- Bereitstellen eines gehäusten Halbleiter-Sensorelements (4) zur Drehzahlerfassung und/oder Positionserfassung
- sowie eines Haltekörpers (2), der eine Montagefläche (22) aufweist, wobei an dem Haltekörper (2) oder an einem an dem Haltekörper (2) angeordneten weiteren Bauteil (52) eine die Montagefläche (22) umlaufende Stützfläche (52) ausgebildet ist, wobei die Montagefläche (22) gegenüber der Stützfläche (52) in einer Richtung senkrecht zur Montagefläche (22) gesehen zurückversetzt ist, wodurch ein Aufnahmeraum (7) gebildet ist,
- Auftragen eines Klebers (71) innerhalb des Aufnahmeraums (7) auf die Montagefläche (22),
- Aufsetzen des gehäusten Halbleiter-Sensorelement (4) mit einer der Montagefläche (22) zugewandten Unterseite (42) unmittelbar auf Stützfläche (52) und den Kleber (7) und,
- Auftragen eines das gehäuste Halbleiter-Sensorelement (4) abdeckendes, aushärtenden Umhüllungsmaterials (3) auf den Haltekörper (2).

## Claims

1. Sensor assembly (1), comprising a holding body (2) and, arranged on the holding body (2), a housed semiconductor sensor element (4) for rotational speed detection and/or position detection, wherein a cured encapsulation material (3) completely covering the housed semiconductor sensor element (4) is arranged on the holding body (2), wherein the housed semiconductor sensor element (4) is adhesively bonded to a mounting surface (22) of the holding body (2) by means of an adhesive (71) which is different from the encapsulation material (3), and the adhesive (71) is arranged in a receiving space (7) between the mounting surface (22) and an underside (42), which faces the mounting surface (22), of the housed semiconductor sensor element (4), **characterized in that** the housed semiconductor sensor element (4) has the outer edge region of its underside (42) lying directly on a supporting surface (52), which surrounds the receiving space (7), of the holding body (2) or on a supporting surface (52), which surrounds the receiving space (7), of a further component (52) arranged on the holding body (2).

2. Sensor assembly according to Claim 1, **characterized in that**, when viewed in a direction perpendicular to the mounting surface (22), the mounting surface (22) is set back with respect to the supporting surface (52).

3. Sensor assembly according to either of the preceding claims, **characterized in that** an annular groove (23) is let into the holding body (2) and runs around a mounting base (21) formed on the holding body (2), wherein the mounting surface (22) is formed on a side of the mounting base (21) that faces the housed semiconductor sensor element (4) and a ring magnet (50) is arranged in the annular groove (23) as the further component (5) of the sensor assembly (1).

4. Sensor assembly according to Claim 3, **characterized in that** the ring magnet (50) is held clamped in the annular groove (23).

5. Sensor assembly according to Claims 1 and 3, **characterized in that** the supporting surface (52) is formed by an end side (51) of the ring magnet (50) that faces the housed semiconductor sensor element (4).

6. Sensor assembly according to Claim 3, **characterized in that** a gap (8) between the ring magnet (50) and the inner walls of the annular groove (23) is filled by means of a potting compound (81).

7. Sensor assembly according to Claim 6, **characterized in that** the potting compound (81) is formed by the cured encapsulation material (3).

8. Sensor assembly according to one of Claims 3 to 7, **characterized in that** a wall (24) enclosing the annular groove (23) projects from a side of the holding body (2) that faces the housed semiconductor sensor element (4) beyond the mounting surface (22) in the direction of the housed semiconductor sensor element (4).

9. Method for producing a sensor assembly (1) according to one of Claims 1 to 8, **characterized by** the following method steps:
- providing a housed semiconductor sensor element (4) for rotational speed detection and/or position detection
- and a holding body (2) which has a mounting surface (22), wherein a supporting surface (52) which runs around the mounting surface (22) is formed on the holding body (2) or on a further component (52) arranged on the holding body (2), wherein, as viewed in a direction perpendicular to the mounting surface (22), the mounting surface (22) is set back with respect to the supporting surface (52), with the result that a receiving space (7) is formed,
- applying an adhesive (71) within the receiving space (7) to the mounting surface (22),
- placing the housed semiconductor sensor element (4) with an underside (42) facing the mounting surface (22) directly on the supporting surface (52) and the adhesive (7), and
- applying a curing encapsulation material (3) covering the housed semiconductor sensor element (4) to the holding body (2).

## Revendications

1. Module de capteur (1), comprenant un corps de support (2) et un élément capteur à semi-conducteur encapsulé (4) agencé sur le corps de support (2) pour la détection de la vitesse de rotation et/ou la détection de la position, un matériau d'enrobage durci (3) qui recouvre entièrement l'élément capteur à semi-conducteur encapsulé (4) étant agencé sur le corps de support (2), l'élément capteur à semi-conducteur encapsulé (4) étant collé sur une surface de montage (22) du corps de support (2) au moyen d'une colle (71) différente du matériau d'enrobage (3) et la colle (71) étant agencée dans un espace de réception (7) entre la surface de montage (22) et un côté inférieur (42), tourné vers la surface de montage (22), de l'élément capteur à semi-conducteur encapsulé (4), **caractérisé en ce que** l'élément capteur à semi-conducteur encapsulé (4) repose, par la zone de bord extérieure de son côté inférieur (42), directement sur une surface d'appui (52), entourant l'espace de réception (7), du corps de support (2) ou sur une surface d'appui (52), entourant l'espace de réception (7), d'un autre composant (52) agencé sur le corps de support (2).

2. Module de capteur selon la revendication 1, **caractérisé en ce que** la surface de montage (22) est décalée vers l'arrière par rapport à la surface d'appui (52), tel que vu dans une direction perpendiculaire à la surface de montage (22).

3. Module de capteur selon l'une quelconque des revendications précédentes, **caractérisé en ce qu'**une rainure annulaire (23) est ménagée dans le corps de support (2), laquelle entoure un socle de montage (21) formé sur le corps de support (2), la surface de montage (22) étant formée sur un côté du socle de montage (21) orienté vers l'élément capteur à semi-conducteur encapsulé (4) et un aimant annulaire (50) étant agencé dans la rainure annulaire (23) en tant qu'autre composant (5) du module de capteur (1).

4. Module de capteur selon la revendication 3, **caractérisé en ce que** l'aimant annulaire (50) est maintenu par serrage dans la rainure annulaire (23).

5. Module de capteur selon les revendications 1 et 3, **caractérisé en ce que** la surface d'appui (52) est formée par un côté frontal (51) de l'aimant annulaire (50) tourné vers l'élément capteur à semi-conducteur encapsulé (4).

6. Module de capteur selon la revendication 3, **caractérisé en ce qu'**un interstice (8) entre l'aimant annulaire (50) et les parois intérieures de la rainure annulaire (23) est rempli au moyen d'une masse de scellement (81).

7. Module de capteur selon la revendication 6, **caractérisé en ce que** la masse de scellement (81) est formée par le matériau d'enrobage durci (3).

8. Module de capteur selon l'une quelconque des revendications 3 à 7, **caractérisé en ce qu'**une paroi (24) comprenant la rainure annulaire (23) fait saillie d'un côté du corps de support (2) orienté vers l'élément capteur à semi-conducteur encapsulé (4), en direction de l'élément capteur à semi-conducteur encapsulé (4), au-delà de la surface de montage (22).

9. Procédé de fabrication d'un module de capteur (1) selon l'une quelconque des revendications 1 à 8, **caractérisé par** les étapes de procédé suivantes,
- la fourniture d'un élément capteur à semi-conducteur encapsulé (4) pour la détection de la vitesse de rotation et/ou la détection de la position,
- ainsi que d'un corps de support (2), qui présente une surface de montage (22), une surface d'appui (52) entourant la surface de montage (22) étant formée sur le corps de support (2) ou sur un autre composant (52) agencé sur le corps de support (2), la surface de montage (22) étant décalée vers l'arrière par rapport à la surface d'appui (52), tel que vu dans une direction perpendiculaire à la surface de montage (22), ce qui forme un espace de réception (7),
- l'application d'une colle (71) à l'intérieur de l'espace de réception (7) sur la surface de montage (22),
- la pose de l'élément capteur à semi-conducteur encapsulé (4) avec un côté inférieur (42) tourné vers la surface de montage (22) directement sur la surface d'appui (52) et la colle (7) et,
- l'application d'un matériau d'enrobage durcissant (3), recouvrant l'élément capteur à semi-conducteur encapsulé (4), sur le corps de support (2).
